# EUROPEAN PATENT APPLICATION

(11) **EP 4 421 948 A1**
(43) Date of publication of application: **28.08.2024**
(21) Application number: 23158509.2
(22) Date of filing: 24.02.2023
(51) Int. Cl.: H01M 10/613, H01M 10/625, H01M 10/643, H01M 10/653, H01M 10/654, H01M 10/6568, H01M 50/213, H01M 50/22, H01M 50/291

(54) **EFFICIENT THERMAL MANAGEMENT FOR BATTERY PACK**

(71) Applicant: VOLVO TRUCK CORPORATION, 405 08 Göteborg (SE)
(72) Inventor: SARKAR, Shantanu, 560034 BENGALURU (IN)
(74) Representative: Kransell & Wennborg KB

(57) **Abstract**

The disclosure relates to a battery pack module (100), comprising a casing comprising at least one inlet (104) for a coolant to enter the battery pack module and at least one outlet (106) for the coolant to exit the battery pack module. A plurality of battery cell rows (110a-f) are arranged in the casing, each battery cell row comprising a set of battery cells in which each battery cell is arranged in abutment with at least one consecutive battery cell, whereby the plurality of battery cell rows form a plurality of battery cell walls, whereby the battery cell walls form a plurality of sections of a flow channel (120a-g), allowing the coolant to flow from the inlet to the outlet.

## Description

### TECHNICAL FIELD

The disclosure relates generally to a battery pack module. In particular aspects, the disclosure relates to an efficient thermal management for a battery pack. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Propulsion technologies for vehicles are evolving to reduce the dependence on fossil fuels, and a promising alternative to internal combustion engines are electric drive systems. To facilitate a large scale introduction of vehicles comprising electric drive systems, there is a need to develop electric drive systems which are both fuel energy efficient and cost competitive.

A fully electric vehicle requires a relatively large propulsion battery which may include multiple sets of battery pack modules, which will generate heat as power is drawn from the battery. To avoid overheating of the battery pack modules, cooling is required. A traditional cooling system for a battery pack module in an electric vehicle may attempt to maintain the battery temperature at a specified level.

However, existing cooling systems may exhibit difficulties maintaining the specified level for each battery cell throughout the battery pack module. Uneven cooling of the battery pack module may result in increased aging of the battery pack module, resulting in increased maintenance and/or need for replacement of the battery pack. It is therefore desirable to provide a battery pack module with improved cooling.

### SUMMARY

According to a first aspect of the disclosure, there is provided a battery pack module, comprising a casing comprising at least one inlet for a coolant to enter the battery pack module and at least one outlet for the coolant to exit the battery pack module, wherein the casing comprises a casing wall, and a plurality of battery cell rows arranged in the casing, each battery cell row comprising a set of battery cells in which each battery cell is arranged in abutment with at least one consecutive battery cell, whereby the plurality of battery cell rows form a plurality of battery cell walls, wherein a first end of each battery cell wall abuts the casing wall and a second end of each battery cell wall is arranged at a distance from the casing wall, and wherein each battery cell wall is arranged at a distance from a neighboring battery cell wall or at a distance from a casing wall to form a plurality of sections of a flow channel, wherein the second end of each battery cell wall forms a connection point connecting at least two sections of the flow channel to each other for allowing the coolant to flow from the inlet to the outlet, wherein the connection point allows coolant to turn around the second end of the battery cell wall.

That each battery cell is arranged in abutment with at least one consecutive battery cell may in other words be expressed such that one side of each battery cell from the set of battery cells is arranged to abut one side of at least another battery from the set of battery cells such that the battery cells together form a barrier for the coolant, thus directing the flow of the coolant. A consecutive battery cell may in other words be expressed as a battery cell in the battery cell row that is placed in abutment to another battery cell from the same battery cell row. The first aspect of the disclosure may seek mitigate the problem of uneven cooling across the battery cells in a battery pack module. In conventional arrangements the coolant cools down the cells as it flows through the battery pack module and the coolant increases its temperature along the way. By the time the coolant has reached the outlet, the rear cells farthest away from the inlet will not be subjected to the same cooling capacity as the battery cells closest to the inlet due to the increase in temperature of the coolant. A technical benefit may include to arrange the cells to form sections of a flow channel wherein coolant is arranged to flow from the inlet to the outlet whereby the coolant may be directed to target the hottest regions within the battery pack module, and a more uniform temperature across the plurality of cells may be achieved.

In some examples, the flow channel may be in the shape of a serpentine path. A serpentine path is a path of a curved shape that bends and turns, wherein an example may be a sinusoidal shape. As opposed to conventional techniques like e.g., immersion wherein the battery cells are placed in a pool of coolant, a technical benefit of a flow channel in the shape of a serpentine path may include that the flow channel is distributed such that the coolant directly comes in contact with each battery cell, without bypassing any hot region within the battery pack module.

In some examples, a phase change material (PCM) may be arranged in contact with at least a portion of the casing wall, the PCM being configured to transfer and/or absorb heat from the coolant. PCM is a substance which provides heating and cooling upon carrying out a phase transition and may be one or a mixture more selected from the group consisting of paraffin, inorganic salts, salt hydrates, carboxylic acids, sugar alcohols, alkaline earth metals or alloys. A technical benefit may include that the cooling capacity of the coolant may be restored as it reaches the casing wall, and that the battery cells located in the vicinity of the casing wall will be cooled down by the PCM. Advantageously, whenever the temperature of the coolant is high, such as after passing through a target hot region or after passing through a considerable number of sections, the flow channel may be arranged to direct the coolant to the sections of the flow channel formed by the casing wall in contact with the PCM, thus restoring the cooling capacity of the coolant.

In some examples, the battery pack module may comprise at least one connection point connecting at least three sections of the flow channel. The connection point may be a point wherein a number of sections of the flow channel may converge to a fewer number of sections of the flow channel (e.g., two sections converging to one section, such that the coolant from two sections will join together into one section), and/or may be a point wherein at least one section of the flow channel may diverge to at least two sections of the flow channel (e.g., one section diverging to two sections, such that the coolant from one section will split into two sections). To summarize, the connection point is a point where a plurality of sections of the flow channel meet, similar to a junction or intersection, allowing the coolant to come together and/or split. A technical benefit may include splitting the flow path and thus allowing the coolant to quickly target hot battery cells at a plurality of locations, and collecting a plurality of flow path to use a single outlet.

In some examples, the battery pack module further may comprise at least one partitioning plate arranged to span a plane inside of the casing, wherein the partitioning plate is bounded by the casing wall, the plane being perpendicular to a height direction of the plurality of battery cells, wherein the height direction is set by the direction extending from the negative battery poles to the positive battery poles of the battery cells, whereby each of the at least one partitioning plate allows coolant to flow through a first transverse space of the casing and a second transverse space of the casing. The at least one partitioning plate divide the space within the battery pack module into layers, the layers being stacked in a height direction. As an example, a single partitioning plate may divide the battery pack module into two layers wherein a first layer contains the positive battery poles and the second layer contains the negative battery poles, and two partitioning plates may further divide the battery pack module into three layers wherein the third layer contains the middle section of the battery cells. However, any number of partitioning plates may be used. A technical benefit may include that the coolant may target battery poles on both sides of the battery cells, which is advantageous since the battery poles are likely to constitute a hot region since they carry electrical current. By including a partitioning plate inside the casing, the flow channel may be allowed to flow through a first transverse space of the casing whereby the battery poles of one side of the battery cells are cooled down, and separately flow through a second transverse space of the casing whereby the battery poles of a second side of the battery cells are cooled down, thereby mitigating the problem of uneven cooling of the battery poles of the battery cells.

In some examples, the at least one partitioning plate may comprise one partitioning plate, and the partitioning plate may further comprise at least one through-hole arranged in a section of the flow channel from the plurality of sections of a flow channel, wherein the at least one through-hole is arranged to transfer coolant from the first transverse space to the second transverse space. A technical benefit may include that the coolant may be transferred freely between the first transverse space and the second transverse space, thus providing more variation in possible flow channel arrangements.

In some examples, the partitioning plate may further comprise a plurality of holes to accommodate the battery cells.

In some examples, the casing may have a rectangular shape.

In some examples, the casing may further comprise a central plane parallel with the height direction and perpendicular to the plane spanned by the partitioning plate, and wherein the casing is symmetrical about the central plane. The central plane is a plane arranged along the mid-section of the battery pack module, dividing the battery pack module into two equal parts.

In some examples, the at least one inlet may be arranged for the coolant to enter the first transverse space of the casing, and the at least one outlet may be arranged for the coolant to exit the second transverse space of the casing.

In some examples, the casing may comprise one coolant inlet arranged in the central plane of the casing. A technical benefit may include that unused coolant with a high cooling capacity may initially target battery cells at the mid-section of the battery pack module at which the battery cells are likely to be hot. That the coolant inlet is arranged in the central plane of the casing may in other words be expressed as the coolant inlet being arranged in the middle of one of the casing walls, whereby coolant may enter the mid-section of the battery pack module.

In some examples, the casing may comprise one coolant outlet arranged in the central plane of the casing.

In some examples, the battery pack module may further comprise a first pair of battery cell walls comprising two neighboring battery cell walls having first ends abutting a casing wall adjacent the at least one inlet, wherein the battery cell walls of the first pair of battery cell walls are arranged at a distance from each other to form a first section of the plurality of sections of the flow channel arranged to direct coolant to flow from the inlet to a first connection point arranged at the second ends of the first pair of battery cell walls.

In some examples, the first connection point may allow coolant to turn in opposite directions around the second ends of the first pair of battery cell walls, thereby splitting the first section of the flow channel into two flow channel sections. The first connection point corresponds to a "T-shaped" three-way junction, separating the first section of the flow channel into two flow channel sections, wherein the two flow channel sections direct the coolant into two opposite directions. The splitting of the flow channel is enabled by the battery cell walls forming a barrier together with the casing wall. As the coolant flows through the first section, the first pair of battery cell walls will form a barrier which encloses the coolant until the coolant reaches the second ends of the battery cell walls which are arranged at a distance from the casing wall. At this point, the coolant will no longer be enclosed by the battery cell walls and may turn in a first direction or a second direction opposite to the first direction, following the outer surface of the second ends. A technical benefit may include that the connection point splits the coolant subsequently to having passed through only a first section of the flow channel, whereby the coolant is likely to have a high cooling capacity. By splitting the first section of the flow channel into two flow channel sections, coolant with a high cooling capacity may be quickly distributed across different regions of the battery pack module.

In some examples, the battery pack module may further comprise N-1 pair or pairs of battery cell walls in addition to the first pair of battery cell walls, wherein N is at least 2, and for each Nth pair of battery cell walls: the first ends of the Nth pair of battery cell walls abutting the casing wall opposite to the casing wall abutted by the (N-1)th pair of battery cell walls, whereby each battery cell wall from the Nth pair of battery cell walls being arranged at a distance from a neighboring battery cell wall from the (N-1)th pair of battery cell walls to form a section of the plurality of sections of the flow channel, whereby the Nth pair of battery cell walls and the (N-1)th pair of battery cell walls form two sections of the plurality of sections of a flow channel arranged for coolant to flow from the second ends of the (N-1)th pair of battery cell walls to the second ends of the Nth pair of battery cell walls.

Initially, the flow channel may be arranged to direct the coolant to the connection point allowing the coolant to turn in opposite directions along two flow channel sections. From here on, for each of the two flow channel sections, the above arrangement will allow the coolant to turn 90 degrees at the casing wall, flow along a flow channel section, turn 90 degrees at the casing wall, flow along a flow channel section, and so on, until the (N-t)th pair of battery cell walls are reached, thereby forming a flow channel in a sinusoidal shape. A technical benefit may include that the coolant initially may target battery cells at the mid-section of the battery pack module, and gradually flow towards the battery cells located near the walls of the battery pack module at which the battery cells are likely to be colder. Consequently, unused coolant with a high cooling capacity may initially target hot battery cells, and used coolant at a higher temperature may be directed to the colder battery cells not requiring as much cooling capacity, thereby achieving a more even temperature throughout the battery pack module.

In some examples, a first battery cell wall from the Nth pair battery cell walls may be arranged at a distance from a first parallel casing wall to form a section of the plurality of sections of a flow channel, the first parallel casing wall being parallel to the central plane, and wherein the section comprises a through-hole; a second battery cell wall from the Nth pair battery cell walls being arranged at a distance from a second parallel casing wall to form a section of the plurality of sections of a flow channel, the second parallel casing wall being opposite the first parallel casing wall, and wherein the section comprises a through-hole; and whereby the Nth pair of battery cell walls and the first and second parallel casing walls form two sections of the plurality of sections of a flow channel arranged for coolant to flow from the second ends of the Nth pair of battery cell walls to the through-holes in the partitioning plate.

In some examples, the battery cell walls are straight.

In some examples, the battery cell walls are arranged parallel to each other.

In some examples, the PCM is arranged in contact with portions of the first parallel casing wall and/or second parallel casing wall. The flow channel may be arranged to direct the coolant to gradually flow from the mid-section towards the walls of the battery pack module. The coolant reaching the first parallel casing wall and/or second parallel casing wall may thus have a lower cooling capacity than the coolant flowing through the mid-section. A technical benefit of arranging PCM in contact with portions of the first parallel casing wall and/or second parallel casing wall may include to restore the cooling capacity of the coolant.

According to a second aspect of the disclosure, there is provided a vehicle comprising a battery pack module according to any of the examples described above in relation to the first aspect.

Effects and features of the second aspect are largely analogous to those described above in relation to the first aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Examples are described in more detail below with reference to the appended drawings.
**FIG. 1** is an exemplary illustration of a vehicle according to an example,
**FIGS. 2A-B** are exemplary cross-sectional views of the battery pack module according to an example, and
**FIG. 3** is an exemplary view of the battery pack module according to an example.

### DETAILED DESCRIPTION

The detailed description set forth below provides information and examples of the disclosed technology with sufficient detail to enable those skilled in the art to practice the disclosure.

The first aspect of the disclosure may seek to mitigate the problem of uneven cooling across the battery cells in a battery pack module. A technical benefit may include to arrange the cells to form sections of a flow channel 120a-g, 120a'-g'wherein coolant is arranged to flow from the inlet 104 to the outlet 106 whereby the coolant may be directed to target the hottest regions within the battery pack module, and a more uniform temperature across the plurality of cells may be achieved.

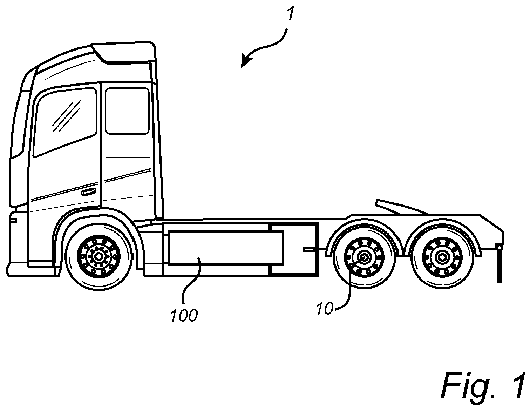

With reference to Fig. 1, a vehicle 1, here embodied as a heavy-duty truck 1, is disclosed for which the battery pack module 100 of a kind described in the present disclosure is advantageous. However, the battery pack module 100 may as well be implemented in other types of vehicles, such as in busses, light-weight trucks, passenger cars, marine applications etc. The battery pack module 100 herein may be a single battery pack module or a plurality of battery pack modules connected in series or parallel. The vehicle 1 is an electric vehicle, such as a full electric vehicle, a fuel cell electric vehicle, or a hybrid electric vehicle, comprising at least one electric machine 10 which may be powered by the battery pack module 100 or may be arranged to transfer regenerative energy to the battery pack module 100.

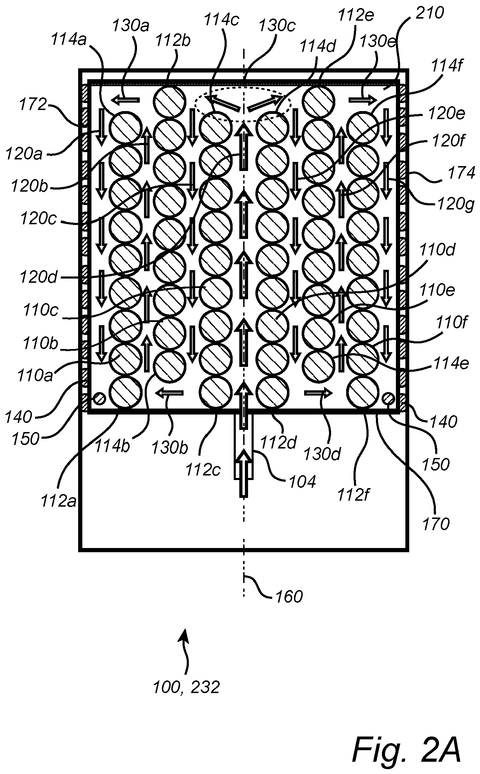

Figs. 2A-B illustrate cross-sectional views of the battery pack module 100 according to an example. The casing herein has a rectangular shape including a central plane 160 arranged along the mid-section of the battery pack module 100, dividing the battery pack module 100 into two symmetrical parts. However, the casing may be of any suitable shape.

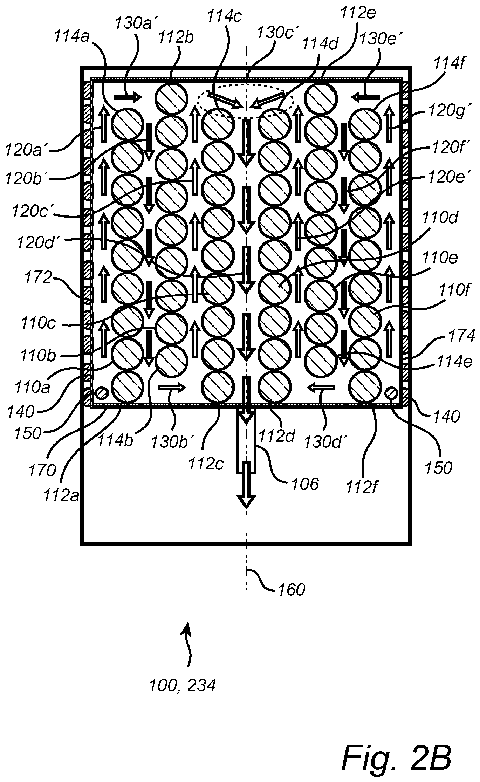

Fig. 2A exemplifies a cross-sectional view of the first transverse space 232 of the battery pack module 100 and Fig. 2B exemplifies a cross-sectional view of the second transverse space 234 of the same battery pack module 100 as in Fig. 2A. The first transverse space 232 and second transverse space 234 may correspond to the top and bottom part of a battery pack module 100 in a height direction 220 set by the direction extending from the negative battery poles 242 to the positive battery poles. The first transverse space 232 is thus preferably arranged above the second transverse space 234.

The casing comprises a casing wall 170 with at least one inlet 104 for a coolant to enter the battery pack module 100, and at least one coolant outlet 106 for the coolant to exit the battery pack module. The coolant inlet 104 and coolant outlet 106 may be arranged in the central plane 160 of the casing, where the coolant inlet 104 may be arranged for the coolant to enter the first transverse space 232 of the casing, and the coolant outlet 106 may be arranged for the coolant to exit the second transverse space 234 of the casing.

A plurality of battery cell rows 110a-f is arranged inside the battery pack module 100, wherein each battery cell row comprises a set of battery cells. The battery cells in Fig. 2A-B are cylindrical and shown as circles, but may be of any type such as pouch cells, prism cells, or square cells.

The battery cell rows 1 10a-f are formed by arranging each battery cell from the set of battery cells in abutment with at least a neighboring battery cell from the set of battery cells, the neighboring battery cell being a consecutive battery cell. By this arrangement, the battery cells may form a barrier for the coolant, i.e., the plurality of battery cell rows 110a-f may form a plurality of battery cell walls. The battery cell walls 1 10a-f are illustrated as straight lines arranged in parallel but may be of any shape and/or size and arranged at any suitable location. As a non-limiting example, the battery cell walls 110a-f may be straight, curved, "T"-shaped, and may have multiple ends, variations in lengths, extending in a labyrinthian fashion, etc. The permutations of arrangements of the battery cells may thus be vast, of which all falls within the scope of the present disclosure.

Each battery cell wall 1 10a-f is arranged at a distance from a neighboring battery cell wall 1 10a-f or at a distance from a casing wall 170 to form a plurality of sections of a flow channel 120a-g, 120a'-g', whereby the coolant may be constrained by the battery cell walls 1 10a-f and casing walls 170 and directed to flow in the sections of a flow channel 120a-g, 120a'-g'constituted by the distance formed by the battery cell walls 110a-f. The direction of the coolant as it flows through the flow channel 120a-g, 120a'-g' is indicated by the arrows. The coolant may thus be directed to any desired part of the battery pack module.

Each battery cell wall 110a-f has a first end 112a-f abutting the casing wall 170 and a second end 114a-f arranged at a distance from the casing wall. The first end 112a-f abutting the casing wall 170 may extend the barrier formed by the respective battery cell wall 1 10a-f, forcing the coolant to flow along the surface of the battery cell wall 1 10a-f and proceed to flow along the casing wall. At the same location, a second end 114a-f of a neighboring battery cell wall 110a-f may be arranged at a distance from the casing wall 170 allowing the coolant to turn around the second end 114a-f of the battery cell wall, in other words, allowing the coolant to flow along the outer surface of the second ends 114a-f and thereby turn and change direction. By this arrangement, the battery cell walls 110a-f form connection points 130a-e, 130a'-e' connecting the sections of the flow channel and allowing the coolant to flow from the inlet 104 to the outlet 106 whereby the flow direction of the coolant is controlled.

The connection point may connect two sections of the flow channel, seen as number 130a, 130b, 130d and 130e in Fig. 2A and 130a', 130b', 130d' and 130e' in Fig. 2B. The connection point may also connect three or more sections of the flow channel, seen as number 130c in Fig. 2A and 130' in Fig. 2B.

The first transverse space 232 is exemplified in Fig. 2A, wherein the battery pack module 100 may comprise a first pair of neighboring battery cell walls 1 10c, 110d having first ends 112c, 112d abutting a casing wall 170 adjacent the inlet 104 and may be arranged at a distance from each other to form a first section of the plurality of sections of the flow channel 120d. The first pair of neighboring battery cell walls 110c, 110d may be arranged to direct coolant to flow from the inlet 104 to a first connection point 130c arranged at the second ends 114c, 114d of the first pair of battery cell walls 110c, 110d. The first connection point 130c may allow coolant to turn in opposite directions around the second ends 114c, 114d of the first pair of battery cell walls 1 10c, 110d, thereby splitting the first section of the flow channel into two flow channel sections 120c, 120e.

The battery pack module 100 exemplified in Fig. 2A may further include a second pair of battery cell walls herein shown as numbers 110b and 110e, and a third pair of battery cell walls herein shown as numbers 110a and 1 10f, in addition to the first pair of battery cell walls shown as numbers 110c and 110d. However, any number N-1 pair or pairs of battery cell walls 110a-f may be used in addition to the first pair of battery cell walls, where N is a number greater or equal to 2.

The second pair of battery cell walls 110b, 110e may have first ends 112b, 112e abutting the casing wall 170 opposite to the casing wall 170 abutted by the first pair of battery cell walls 110c, 110d, and may thereby allow the coolant to turn 90 degrees at the first connection point 130c.

Further, each battery cell wall 110b, 110c from the second pair of battery cell walls 110b, 110e may be arranged at a distance from a neighboring battery cell wall 110c, 110d from the first pair of battery cell walls 110c, 110d to form a section 120c, 120e of the plurality of sections of the flow channel 120a-g, 120a'-g'. The second pair of battery cell walls 110b, 110e and the first pair of battery cell walls 110c, 110d may hereby form two sections 120c, 120e of the plurality of sections of a flow channel 120a-g, 120a'-g'arranged for coolant to flow from the second ends 114c, 114d of the first pair of battery cell walls 110c, 110d to the second ends 114b, 114e of the second pair of battery cell walls. Thereby, after the coolant is split into two flow channel sections 120c, 120e at the first connection point 130c, the coolant may flow in two straight parallel lines from one side of the casing wall 170 to an opposite side of the casing wall 170. This above arrangement is repeated for the third pair of battery cell walls 110a, 110f, such that the coolant will turn 90 degrees at connection points 130b, 130d, flow along two parallel flow channel sections 120b and 120f, and again turn 90 degrees at connection points 130a, 130e, wherein the flow channel will take on the shape of a serpentine path.

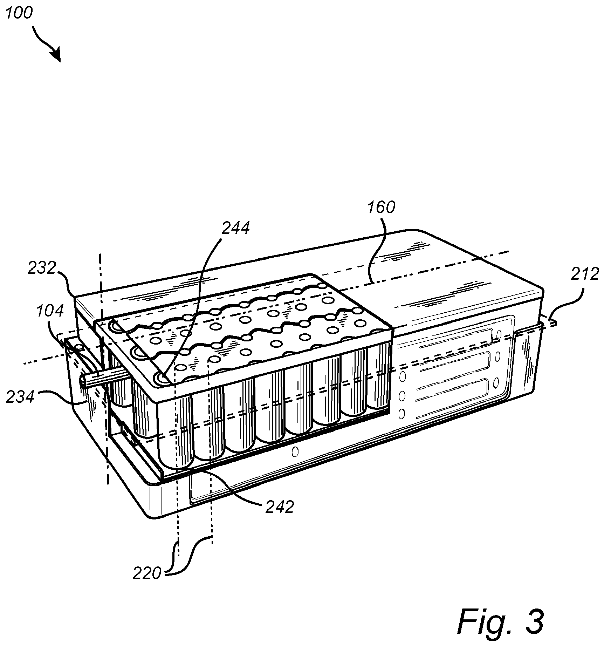

The arrangement of battery cell walls 110a-f in the second transverse space 234 of the battery pack module 100 is exemplified in Fig. 2B, and is largely analogous to the arrangement of battery cell walls 110a-f in the first transverse space 232 of the battery pack module. The first transverse space 232 in Fig. 2A and second transverse space 234 Fig. 2B are separated by a partitioning plate 210, which will now be described with reference to Fig. 3.

Fig. 3 is an exemplary view of the battery pack module 100 according to an example, further illustrating a plane 212. The plane 212 illustrates the placement of the partitioning plate 210 inside the casing. To avoid cluttering, the partitioning plate 210 itself is omitted from Fig. 3. The partitioning plate 210 may be bounded by the casing wall 170 and made from a suitable material, such as a metal, and/or a material providing additional cooling capacity such as a thermoelectric plate. The plane 212 may be perpendicular to a height direction 220 of the plurality of battery cells, herein illustrated as cylinders, wherein the height direction 220 is set by the direction extending from the negative battery poles 242 to the positive battery poles 244 of the battery cells. Consequently, the partitioning plate 210 may separate the battery pack module 100 into a first transverse space 232 of the casing and a second transverse space 234 of the casing stacked on top of each other in a height direction 220, whereby approximately the top half of the battery cells including the positive battery poles 244 may be contained within the first transverse space 232 and approximately a bottom half of the battery cells including the negative battery poles 242 may be contained within the second transverse pace 234.

Fig. 3 show the plane 212 illustrating the placement of a single partitioning plate 210, however although not illustrated, any number of partitioning plates 210 may be used. In further examples, the battery pack module 100 may include two partitioning plates 210 dividing the battery pack module 100 into three layers wherein the third layer corresponds to a third transverse space containing the middle section of the battery cells, or three partitioning plates 210 dividing the battery pack module 100 into four layers, etc.

Returning to Figs. 2A-B, the partitioning plate 210 may comprise two through-holes 150. The through-holes 150 are arranged to transfer coolant from the flow channel sections 120a and 120g in the first transverse space 232 to the two flow channel sections 120a' and 120g' in the second transverse pace 234. The partitioning plate 210 may further include a plurality of holes to accommodate the battery cells, allowing the battery cells to have one part in the first transverse space 232 and a second part in the second transverse pace 234.

As exemplified in fig. 2A, a first battery cell wall 110a from the third pair battery cell walls 1 10a, 110f may be arranged at a distance from a first parallel casing wall 172 to form a section 120a of the plurality of sections of a flow channel 120a-g, 120a'-g', wherein the first parallel casing wall 172 may be parallel to the central plane 160, a second battery cell wall 110f from the third pair battery cell walls 1 10a, 110f may be arranged at a distance from a second parallel casing wall 174 to form a section 120g of the plurality of sections of a flow channel 120a-g, 120a'-g', the second parallel casing wall 174 may be opposite the first parallel casing wall. A through-hole 150 is located at the end of each section 120a, 120g of the plurality of sections of a flow channel 120a-g, 120a'-g'. The flow channel may thus be arranged for coolant to flow from the second ends 114a, 114f of the third pair of battery cell walls 110a, 110f, along the first parallel casing wall 172 and second parallel casing wall 174, to the through-holes 150 in the partitioning plate.

At this point, the coolant may have accumulated heat and may thus have a lower cooling capacity in comparison to unused coolant. To restore the cooling capacity of the coolant as continues to flow to the second transverse space 234, a phase change material (PCM) 140 may be arranged in contact with the first parallel casing wall 172 and/or second parallel casing wall. The arrangement of the PCM 140 is not limited to the first parallel casing wall 172 and/or second parallel casing wall 174 and the PCM 140 may for example be arranged on any casing wall 170, or on/inside the partitioning plate.

The PCM 140 may absorb the heat generated by the battery pack module 100 while in contact with the casing wall 140. By absorbing the heat, the PCM 140 may undergo a phase transition wherein heat may be transferred from the battery pack module 100, thus cooling down the battery pack module 100. According to non-exclusive examples, the PCM 140 may be selected from any suitable PCM 140 available on the market and may be one or a mixture selected from the group consisting of paraffin, inorganic salts, salt hydrates, carboxylic acids, sugar alcohols, alkaline earth metals or alloys.

As exemplified in fig. 2B, after the coolant have passed through the through-hole 150, the coolant may flow through a flow channel largely analogous to the flow path of the first transverse space 232, differing only by the direction of the coolant. The coolant may follow a serpentine path to a connection point 130', which may allow coolant from two sections of the flow channel 120c', 120e' to converge and join together into a last section of the flow channel 120d' whereby the coolant may proceed to flow along the last section of the flow channel 120d' to the outlet 106.

### EXAMPLE LIST

Example 1. A battery pack module, comprising: - a casing comprising at least one inlet for a coolant to enter the battery pack module and at least one outlet for the coolant to exit the battery pack module, wherein the casing comprises a casing wall, and - a plurality of battery cell rows arranged in the casing, each battery cell row comprising a set of battery cells in which each battery cell is arranged in abutment with at least one consecutive battery cell, whereby the plurality of battery cell rows form a plurality of battery cell walls, wherein a first end of each battery cell wall abuts the casing wall and a second end of each battery cell wall is arranged at a distance from the casing wall, and wherein each battery cell wall is arranged at a distance from a neighboring battery cell wall or at a distance from a casing wall to form a plurality of sections of a flow channel, wherein the second end of each battery cell wall forms a connection point connecting at least two sections of the flow channel to each other for allowing the coolant to flow from the inlet to the outlet, wherein the connection point allows coolant to turn around the second end of the battery cell wall.

Example 2. The battery pack module of example 1, wherein the flow channel is in the shape of a serpentine path.

Example 3. The battery pack module of any of the preceding examples, wherein a phase change material (PCM) is arranged in contact with at least a portion of the casing wall, the PCM being configured to transfer and/or absorb heat from the coolant.

Example 4. The battery pack module of any of the preceding examples, wherein the battery pack module comprises at least one connection point connecting at least three sections of the flow channel.

Example 5. The battery pack module of any of the preceding examples, further comprising at least one partitioning plate arranged to span a plane inside of the casing, wherein the partitioning plate is bounded by the casing wall, the plane being perpendicular to a height direction of the plurality of battery cells, wherein the height direction is set by the direction extending from the negative battery poles to the positive battery poles of the battery cells, whereby each of the at least one the partitioning plate allows coolant to flow through a first transverse space of the casing and a second transverse space of the casing.

Example 6. The battery pack module of example 5, wherein the at least one partitioning plate comprises one partitioning plate, and wherein the partitioning plate further comprises at least one through-hole arranged in a section of the flow channel from the plurality of sections of a flow channel, wherein the at least one through-hole is arranged to transfer coolant from the first transverse space to the second transverse space.

Example 7. The battery pack module of any of examples 5-6, wherein the partitioning plate further comprises a plurality of holes to accommodate the battery cells.

Example 8. The battery pack module of any of the preceding examples, wherein the casing has a rectangular shape.

Example 9. The battery pack module of any of the preceding examples, wherein the casing further comprises a central plane parallel with the height direction and perpendicular to the plane spanned by the at least one partitioning plate, and wherein the casing is symmetrical about the central plane.

Example 10. The battery pack module of any of examples 5-9, further comprising the at least one inlet arranged for the coolant to enter the first transverse space of the casing, and the at least one outlet being arranged for the coolant to exit the second transverse space of the casing.

Example 11. The battery pack module of any of examples 9-10, wherein the casing comprises one coolant inlet arranged in the central plane of the casing.

Example 12. The battery pack module of any of examples 9-11, wherein the casing comprises one coolant outlet arranged in the central plane of the casing.

Example 13. The battery pack module of any of the preceding examples, further comprising a first pair of battery cell walls comprising two neighboring battery cell walls having first ends abutting a casing wall adjacent the at least one inlet 104, wherein the battery cell walls of the first pair of battery cell walls are arranged at a distance from each other to form a first section of the plurality of sections of the flow channel arranged to direct coolant to flow from the inlet to a first connection point arranged at the second ends of the first pair of battery cell walls.

Example 14. The battery pack module of example 13, wherein the first connection point allows coolant to turn in opposite directions around the second ends of the first pair of battery cell walls, thereby splitting the first section of the flow channel into two flow channel sections.

Example 15. The battery pack module of any of examples 13-14, further comprising N-1 pair or pairs of battery cell walls in addition to the first pair of battery cell walls, wherein N is at least 2, and for each Nth pair of battery cell walls: the first ends of the Nth pair of battery cell walls abutting the casing wall opposite to the casing wall abutted by the (N-1)th pair of battery cell walls, whereby each battery cell wall from the Nth pair of battery cell walls being arranged at a distance from a neighboring battery cell wall from the (N-1)th pair of battery cell walls to form a section of the plurality of sections of the flow channel, whereby the Nth pair of battery cell walls and the (N-1)th pair of battery cell walls form two sections of the plurality of sections of a flow channel arranged for coolant to flow from the second ends of the (N-1)th pair of battery cell walls to the second ends of the Nth pair of battery cell walls.

Example 16. The battery pack module of examples 6 and 15, wherein a first battery cell wall from the Nth pair battery cell walls being arranged at a distance from a first parallel casing wall to form a section of the plurality of sections of a flow channel, the first parallel casing wall being parallel to the central plane, and wherein the section comprises a through-hole; a second battery cell wall from the Nth pair battery cell walls being arranged at a distance from a second parallel casing wall to form a section of the plurality of sections of a flow channel, the second parallel casing wall being opposite the first parallel casing wall, and wherein the section comprises a through-hole; and whereby the Nth pair of battery cell walls and the first and second parallel casing walls form two sections of the plurality of sections of a flow channel arranged for coolant to flow from the second ends of the Nth pair of battery cell walls to the through-holes in the partitioning plate.

Example 17. The battery pack module of any of the preceding examples, wherein the battery cell walls are straight.

Example 18. The battery pack module of any of the preceding examples, wherein the battery cell walls are arranged parallel to each other.

Example 19. The battery pack module of any of examples 3 and 16-18, wherein the PCM is arranged in contact with portions of the first parallel casing wall and/or second parallel casing wall.

Example 20. A vehicle comprising a battery pack module according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack module (100), comprising:
- a casing comprising at least one inlet (104) for a coolant to enter the battery pack module and at least one outlet (106) for the coolant to exit the battery pack module, wherein the casing comprises a casing wall (170), and
- a plurality of battery cell rows (110a-f) arranged in the casing, each battery cell row comprising a set of battery cells in which each battery cell is arranged in abutment with at least one consecutive battery cell, whereby the plurality of battery cell rows form a plurality of battery cell walls (110a-f), wherein a first end (112a-f) of each battery cell wall abuts the casing wall and a second end (114a-f) of each battery cell wall is arranged at a distance from the casing wall, and wherein each battery cell wall is arranged at a distance from a neighboring battery cell wall or at a distance from a casing wall to form a plurality of sections of a flow channel (120a-g, 120a'-g'),
wherein the second end of each battery cell wall forms a connection point (130a-e, 130a'-e') connecting at least two sections of the flow channel to each other for allowing the coolant to flow from the inlet to the outlet, wherein the connection point allows coolant to turn around the second end of the battery cell wall.

2. The battery pack module of claim 1, wherein the flow channel is in the shape of a serpentine path.

3. The battery pack module of any of the preceding claims, wherein a phase change material (PCM) (140) is arranged in contact with at least a portion of the casing wall, the PCM being configured to transfer and/or absorb heat from the coolant.

4. The battery pack module of any of the preceding claims, wherein the battery pack module comprises at least one connection point (130c) connecting at least three sections of the flow channel.

5. The battery pack module of any of the preceding claims, further comprising at least one partitioning plate (210) arranged to span a plane (212) inside of the casing, wherein the partitioning plate is bounded by the casing wall, the plane being perpendicular to a height direction (220) of the plurality of battery cells, wherein the height direction is set by the direction extending from the negative battery poles (242) to the positive battery poles (244) of the battery cells, whereby each of the at least one the partitioning plate allows coolant to flow through a first transverse space (232) of the casing and a second transverse space (234) of the casing.

6. The battery pack module of claim 5, wherein the at least one partitioning plate comprises one partitioning plate, and wherein the partitioning plate further comprises at least one through-hole (150) arranged in a section of the flow channel from the plurality of sections of a flow channel, wherein the at least one through-hole is arranged to transfer coolant from the first transverse space to the second transverse space.

7. The battery pack module of any of claims 5-6, wherein the casing further comprises a central plane (160) parallel with the height direction and perpendicular to the plane spanned by the at least one partitioning plate, and wherein the casing is symmetrical about the central plane.

8. The battery pack module of any of claims 5-7, further comprising the at least one inlet arranged for the coolant to enter the first transverse space of the casing, and the at least one outlet being arranged for the coolant to exit the second transverse space of the casing.

9. The battery pack module of any of claims 7-8, wherein the casing comprises one coolant inlet arranged in the central plane of the casing.

10. The battery pack module of any of the preceding claims, further comprising a first pair of battery cell walls (110c, 110d) comprising two neighboring battery cell walls having first ends (112c, 112d) abutting a casing wall adjacent the at least one inlet, wherein the battery cell walls of the first pair of battery cell walls are arranged at a distance from each other to form a first section (120d) of the plurality of sections of the flow channel arranged to direct coolant to flow from the inlet to a first connection point (130c) arranged at the second ends (114c, 114d) of the first pair of battery cell walls.

11. The battery pack module of claim 10, wherein the first connection point allows coolant to turn in opposite directions around the second ends of the first pair of battery cell walls, thereby splitting the first section of the flow channel into two flow channel sections (120c, 120e).

12. The battery pack module of any of claims 10-11, further comprising N-1 pair or pairs of battery cell walls in addition to the first pair of battery cell walls, wherein N is at least 2, and for each Nth pair of battery cell walls:
the first ends of the Nth pair of battery cell walls abutting the casing wall opposite to the casing wall abutted by the (N-1)th pair of battery cell walls,
whereby each battery cell wall from the Nth pair of battery cell walls being arranged at a distance from a neighboring battery cell wall from the (N-1)th pair of battery cell walls to form a section of the plurality of sections of the flow channel,
whereby the Nth pair of battery cell walls and the (N-1)th pair of battery cell walls form two sections of the plurality of sections of a flow channel arranged for coolant to flow from the second ends of the (N-1)th pair of battery cell walls to the second ends of the Nth pair of battery cell walls.

13. The battery pack module of claims 6 and 12, wherein
a first battery cell wall from the Nth pair battery cell walls being arranged at a distance from a first parallel casing wall (172) to form a section of the plurality of sections of a flow channel, the first parallel casing wall being parallel to the central plane, and wherein the section comprises a through-hole;
a second battery cell wall from the Nth pair battery cell walls being arranged at a distance from a second parallel casing wall (174) to form a section of the plurality of sections of a flow channel, the second parallel casing wall being opposite the first parallel casing wall, and wherein the section comprises a through-hole; and
whereby the Nth pair of battery cell walls and the first and second parallel casing walls form two sections of the plurality of sections of a flow channel arranged for coolant to flow from the second ends of the Nth pair of battery cell walls to the through-holes in the partitioning plate.

14. The battery pack module of any of claims 3 and 13, wherein the PCM is arranged in contact with portions of the first parallel casing wall and/or second parallel casing wall.

15. A vehicle comprising a battery pack module according to any one of the preceding claims.
